# FASCICULE DE BREVET EUROPEEN

(11) **EP 3 704 072 B1**
(45) Date de publication et mention de la délivrance du brevet: **02.09.2026**
(21) Numéro de dépôt: 18800709.0
(22) Date de dépôt: 22.10.2018
(51) Int. Cl.: C04B 7/153, C04B 7/24, C04B 28/04, C04B 28/14, C04B 7/19, C04B 7/21, C04B 28/08

(54) **LIANT À BASE DE LAITIER RICHE EN ALUMINE**
BINDEMITTEL AUF DER BASIS VON ALUMINIUMOXIDREICHER SCHLACKE
BINDER BASED ON ALUMINA-RICH SLAG

(30) Priorité: 30.10.2017 FR 1760235
(43) Date de publication de la demande: 09.09.2020
(73) Titulaire: SAINT-GOBAIN WEBER, 94370 Sucy-en-Brie (FR)
(72) Inventeur: RAYNAUD, Lionel, 11100 Narbonne (FR); ALBERT, Marianne, 1180 Uccle (BE); LAMBERET, Séverine, 01320 Chalamont (FR)
(74) Mandataire: Saint-Gobain Recherche
(86) Numéro de dépôt international: PCT/FR2018/052617
(87) Numéro de publication internationale: WO 2019/086780

(56) Documents cités:
- WO-A1-2015/020623
- FR-A1- 2 249 044
- FR-A1- 2 630 432
- FR-A2- 2 390 400
- GB-A- 919 322
- JP-A- 2005 247 618
- JUAN LIZARAZO-MARRIAGA ET AL: "Effect of Steel Slag and Portland Cement in the Rate of Hydration and Strength of Blast Furnace Slag Pastes", JOURNAL OF MATERIALS IN CIVIL ENGINEERING, AMERICAN SOCIETY OF CIVIL ENGINEERS, US, vol. 23, no. 2, 1 February 2011 (2011-02-01), pages 153 - 160, XP008172507, ISSN: 0899-1561, [retrieved on 20100705], DOI: 10.1061/(ASCE)MT.1943-5533.0000149
- M. CONJEAUD ET AL: "A new steel slag for cement manufacture: Mineralogy and hydraulicity", CEMENT AND CONCRETE RESEARCH., vol. 11, no. 1, 1 January 1981 (1981-01-01), US, pages 85 - 102, XP055478202, ISSN: 0008-8846, DOI: 10.1016/0008-8846(81)90012-0
- MARAFI M ET AL: "Spent catalyst waste management: A review", RESOURCES, CONSERVATION AND RECYCLING, ELSEVIER, AMSTERDAM, NL, vol. 52, no. 6, 1 April 2008 (2008-04-01), pages 859 - 873, XP022595323, ISSN: 0921-3449, [retrieved on 20080403], DOI: 10.1016/J.RESCONREC.2008.02.004

## Description

La présente invention porte sur un liant hydraulique pour composition de mortier à base d'un sous-produit de l'industrie, sur une composition de mortier comprenant ledit liant, ainsi que sur des produits pour le sol ou des mortiers techniques obtenus à partir d'une telle composition.

De nombreuses compositions de mortier utilisées dans le domaine de la construction mettent en œuvre des ciments de type alumineux (ou encore connus sous l'abréviation CAC pour « ciments d'aluminates de calcium ») ou sulfoalumineux (ou encore connus sous l'abréviation CSA pour « ciments de sulfoaluminates de calcium »). Ces types de ciments CAC sont développés depuis de nombreuses années et leur utilisation est aujourd'hui répandue. En effet, ces ciments permettent notamment de raccourcir les temps de prise et donc d'accélérer le durcissement de la composition mais également de maitriser les variations dimensionnelles lors du durcissement ou également de renforcer la résistance mécanique. Ainsi les ciments alumineux ou sulfoalumineux sont utilisés en mélange avec des ciments Portland pour atteindre des prises rapides. Le pouvoir accélérateur du système binaire dépend du ratio CAC/OPC. Il est également connu que les ciments alumineux ou sulfoalumineux sont utilisés en mélange avec des sources de sulfate de calcium et éventuellement du ciment Portland pour maîtriser les variations dimensionnelles ou encore pour obtenir un séchage endogène rapide.

Une des préoccupations actuelles reste de réduire de façon importante l'empreinte carbone des produits pour la construction. Les procédés de fabrication de clinker nécessitent des opérations de décarbonatation, de calcination, de clinkérisation par chauffage, notamment à des températures très élevées de l'ordre de 1450°C. Les ciments alumineux et Portland sont par exemple à l'origine d'émissions d'environ 800 kg de CO₂ par tonne de ciment produit. Ils sont également consommateurs de ressources énergétiques et naturelles.

Une solution alternative aux ciments alumineux ou sulfoalumineux présenterait donc un intérêt potentiel pour les industriels. C'est dans ce cadre que s'inscrit la présente invention qui propose un liant hydraulique à base d'un sous-produit de l'industrie, considéré comme un sous-produit donc peu ou pas valorisé jusqu'à aujourd'hui. Le procédé de préparation du sous-produit en vue de son utilisation dans des matériaux de construction génère une quantité moindre d'émissions de CO₂ et donc permet d'améliorer le bilan carbone.

Le document WO2015/020623 décrit un ciment alumineux alternatif à base d'un laitier alumineux broyé issu de recyclage de catalyseurs de craquage catalytique. Le laitier comprend 71.31% Al₂O₃, 6.02% SiO₂, 0.29% CaO.

La présente invention porte sur un liant hydraulique selon la revendication 1

Dans ce document, les compositions chimiques élémentaires sont données en % massiques équivalents d'oxyde. Par exemple, dire qu'une substance contient X% d'alumine signifie que cette substance contient l'élément Aluminium en quantité équivalente à celle apportée par X% d'alumine; cela ne signifie pas nécessairement que la substance contient de l'alumine en tant que composé chimique ou constituant minéralogique.

Un laitier est un sous-produit d'un procédé industriel mettant en œuvre la fusion d'une matière de départ, fusion destinée à séparer des métaux d'une phase d'oxydes, cette dernière étant appelée « laitier ».

Au sens de la présente invention, le terme granulé signifie que le laitier alumineux fondu a subi une trempe thermique à l'eau ayant pour conséquence l'obtention de grains en général majoritairement amorphes. Le laitier granulé est ensuite broyé afin de l'activer, comme expliqué plus en détail dans la suite du texte.

Les inventeurs ont pu mettre en évidence qu'un tel laitier pouvait se substituer aux ciments alumineux, en conférant les mêmes propriétés d'accélération du durcissement de la composition, de maitrise des variations dimensionnelles lors du durcissement et d'amélioration de la résistance mécanique. Ces propriétés rendent particulièrement avantageux l'ajout d'un tel liant dans des compositions de mortier pour produits de sol, notamment des chapes et des enduits.

Le laitier alumineux granulé broyé comprend entre 30% en poids et 60% en poids, notamment de 30 à 50% en poids, de préférence entre 32 et 45% en poids, voire entre 35 et 43% en poids d'alumine.

La teneur en silice du laitier alumineux granulé broyé est comprise entre 5 et 25% en poids, voire même entre 10 et 20% en poids par rapport à l'ensemble des composants du laitier alumineux granulé broyé. De façon préférée, le laitier alumineux granulé broyé comprend entre 12 et 18 % en poids de silice.

Le laitier alumineux granulé broyé comprend également de la chaux (CaO). La teneur en chaux est inférieure à la teneur en alumine - comme indiqué ci-avant ; elle est comprise entre 20 et 40% en poids, notamment entre 25 et 35% en poids.

Afin de ne pas impacter négativement le temps de prise, la teneur en oxyde de fer dans le laitier alumineux est de préférence inférieure à 5% en poids, notamment inférieure à 3% en poids, et même inférieure à 2% en poids.

Le laitier alumineux granulé broyé est majoritairement, voire totalement, amorphe. Le taux de matière amorphe, tel que déterminé par diffraction des rayons X selon la méthode de Rietveld, est de préférence d'au moins 66%, notamment 90%, et même 95% ou 98% en masse.

Le laitier alumineux granulé broyé est de préférence issu du recyclage par fusion totale de catalyseurs utilisés pour la désulfuration des produits pétroliers, notamment de catalyseurs à base de molybdène et/ou de cobalt. Ces catalyseurs sont recyclés et un certain nombre de sous-produits sont obtenus pendant les cycles de recyclage. Un des sous-produits obtenus est un laitier alumineux dont la teneur en silice est inférieure à 30% en poids. Le laitier alumineux comprend de préférence du molybdène ou du cobalt, en une teneur pondérale d'au plus 0,5% exprimée en poids d'oxyde.

Ce sous-produit se présente, à l'issue du recyclage du catalyseur, sous la forme de granulats d'une taille moyenne généralement comprise entre 2 et 5 mm. A ce diamètre, les granulats de laitiers alumineux sont généralement inertes. Afin de les rendre réactifs, il est préférable de les broyer pour obtenir des particules fines. Cette opération de broyage est à prendre en considération pour calculer l'empreinte carbone lors de la fabrication du liant. Toutefois si on la compare à l'empreinte carbone d'un procédé de fabrication d'un ciment alumineux ou sulfoalumineux, l'opération de broyage permet de réduire les émissions de CO₂ de plus de 90%.

Le laitier alumineux granulé broyé se présente de préférence sous forme de granules broyées possédant un diamètre de particules D50 inférieur à 20 µm, de préférence inférieur à 15 µm. Le diamètre D50 est le diamètre tel que 50% en masse des particules ont un diamètre inférieur à cette valeur D50. Cette finesse des particules permet notamment de donner au laitier alumineux granulé une bonne réactivité lui permettant d'être utilisé dans une composition de mortier et d'obtenir les propriétés attendues en termes de temps de prise et de résistance mécanique.

Le liant comprend de préférence le laitier alumineux granulé broyé et au moins un des constituants suivants:
- un ou plusieurs ciments choisis parmi les ciments Portland, les ciments bélitiques, les ciments alumineux ou sulfoalumineux, les ciments de mélanges pouzzolaniques comprenant éventuellement des cendres volantes, des fumées de silice, du calcaire, du schiste calciné et/ou des pouzzolanes naturelles ou calcinées, et/ou
- une source de sulfate de calcium choisie parmi le plâtre, l'hémihydrate, le gypse et /ou l'anhydrite, seuls ou en mélange.

Le liant selon la présente invention peut être un liant binaire, dans le sens où il est le mélange de deux constituants, ou un liant ternaire s'il s'agit d'un mélange de trois constituants. Le liant peut également être plus complexe dans sa composition et comprendre plus de trois constituants différents.

Dans un système binaire comprenant le laitier alumineux granulé broyé et un ciment, de façon avantageuse, le liant est constitué de laitier alumineux granulé broyé et de ciment Portland. Préférentiellement dans un système binaire de ce type, la teneur en laitier alumineux granulé broyé est inférieure à 40% en poids, le reste étant le ciment Portland. Encore plus préférentiellement, la teneur en laitier alumineux granulé broyé est inférieure à 20% en poids. Cette quantité limitée de laitier alumineux permet de maintenir des résistances mécaniques compatibles avec les applications souhaitées.

Dans un système binaire constitué de laitier alumineux granulé broyé et d'une source de sulfate de calcium, la teneur en laitier alumineux granulé broyé peut être plus élevée. Un tel système peut comprendre jusqu'à 90% en poids de laitier alumineux granulé broyé.

Le liant peut également être avantageusement un liant ternaire et être constitué de laitier alumineux granulé broyé, de ciment Portland et de sulfate de calcium dans une de ses diverses formes minéralogiques comme par exemple le plâtre. Les proportions relatives de chacun des constituants peuvent varier en fonction de l'application recherchée pour le mortier. Par exemple, le liant peut comprendre entre 10 et 50% en poids de ciment Portland, entre 30 et 70% en poids de laitier alumineux granulé broyé, et entre 10 et 50% en poids de sulfate de calcium.

Le liant selon la présente invention peut éventuellement comprendre du ciment alumineux ou sulfoalumineux. De façon préférée, ledit liant est toutefois exempt de ciment alumineux ou sulfoalumineux.

La présente invention porte également sur une composition sèche de mortier comprenant au moins un liant hydraulique selon l'invention et des granulats et/ou des fillers.

La composition est désignée comme sèche puisque la majorité de ces constituants sont sous forme pulvérulente. Les pourcentages de chacun des constituants sont donnés en pourcentages massiques par rapport à la totalité des composants de ladite composition.

Les fillers sont des matières minérales inertes finement broyées, de type calcaires ou siliceuses. Leur teneur est généralement comprise entre 0 et 30% en poids par rapport à la composition sèche. Les granulats utilisés généralement dans les compositions de mortier ont un diamètre inférieur à 8 mm. Les granulats sont des grains minéraux, notamment des grains de pierre, graviers, gravillons, cailloux et/ou sables dont la teneur varie généralement entre 30 et 95% en poids par rapport à la composition sèche de mortier.

Avantageusement, la composition de mortier selon la présente invention comprend un liant hydraulique binaire qui est un mélange du laitier alumineux granulé broyé comprenant moins de 30% en poids de silice et de ciment Portland.

Elle peut également comprendre un liant hydraulique ternaire qui est le mélange du laitier alumineux granulé broyé et de deux autres liants choisis parmi :
- un ciment choisi parmi les ciments Portland, les ciments bélitiques, les ciments alumineux ou sulfoalumineux, les ciments de mélanges pouzzolaniques comprenant éventuellement des cendres volantes, des fumées de silice, du calcaire, du schiste calciné et/ou des pouzzolanes naturelles ou calcinées, et/ou
- une source de sulfate de calcium choisie parmi le plâtre, l'hémihydrate, le gypse et /ou l'anhydrite, seuls ou en mélange

De façon préférée, la composition de mortier selon la présente invention comprend un liant hydraulique ternaire qui est le mélange du laitier alumineux granulé broyé comprenant moins de 30% en poids de silice, de ciment Portland et d'une source de sulfate de calcium choisie parmi le plâtre, l'hémihydrate, le gypse et /ou l'anhydrite, seuls ou en mélange.

Très préférentiellement, la composition de mortier est exempte de ciment alumineux ou sulfoalumineux.

Le liant hydraulique représente de préférence entre 5 et 50% en poids du mélange sec total des différents constituants pulvérulents, en fonction de l'utilisation choisie pour la composition.

La composition de mortier selon la présente invention peut comprendre un activateur choisi parmi les activateurs connus pour leur utilisation dans les compositions pour mortiers à base de liants ternaires ou de ciments.

La composition peut également comprendre un ou plusieurs additifs, choisis parmi des agents rhéologiques, des agents rétenteurs d'eau, des agents entraîneurs d'air, des agents épaississants, des agents de protection biocides, des agents dispersants, des pigments, des accélérateurs et/ou des retardateurs, des résines polymériques. La teneur totale en additifs et adjuvants varie classiquement entre 0,001 et 5% en poids par rapport au poids total de la composition sèche.

La présence de ces différents additifs permet, notamment mais pas uniquement, d'adapter le temps de prise ou la rhéologie de la composition de mortier humide, c'est-à-dire après gâchage avec de l'eau, de sorte à répondre aux attentes en fonction du produit souhaité.

La présente invention porte également sur des produits pour sols tels que des enduits ou chapes et également sur des mortiers techniques susceptibles d'être obtenus par gâchage avec de l'eau de la composition de mortier sèche.

A titre d'exemple, pour un enduit de sol auto lissant, le début de prise est généralement inférieur à 2 heures. Les valeurs d'étalement de la composition humide doivent être généralement supérieures à 150 mm lorsqu'elles sont mesurées à 2 minutes et supérieures à 135 mm lorsqu'elles sont mesurées à 20 min.

Le produit obtenu après séchage et durcissement de la composition de mortier humide qui peut être un enduit de sol ou une chape doit répondre à certaines caractéristiques mécaniques. Par exemple, la résistance en flexion de ces produits doit notamment être supérieure à 4 MPa après 28 jours, et la résistance en compression doit être supérieure à 18 MPa après 28 jours pour une classe P3.

Pour des applications pour sols, il est également important que le retrait lors du séchage de la composition humide soit contrôlé. Ce retrait est généralement inférieur à 1 mm/m.

Les exemples ci-après illustrent l'invention sans en limiter la portée.

Un laitier alumineux granulé broyé, issu du recyclage par fusion totale de catalyseurs de désulfurisation des produits pétroliers à base de cobalt et de molybdène, est utilisé dans les exemples suivants. Les constituants principaux de ce laitier sont l'alumine (41%), la chaux (32,6%), la silice (12,6%), l'oxyde de magnésium (8,9%), l'oxyde de fer (1,6%) et le soufre (1,6%). D'autres oxydes notamment de molybdène, de nickel, de cobalt, de chrome, de vanadium, de zinc, de manganèse, de phosphore, de potassium, de titane, ainsi que du chlore sont également présents dans le laitier, mais à des teneurs minimes, inférieures à 0,5%.

Les granules de ce laitier alumineux qui possèdent un diamètre maximum de 5 mm ont été broyées, pour obtenir une finesse équivalente à celle d'un ciment. La distribution granulométrique du laitier alumineux granulé broyé est la suivante : D₁₀ de 0,7 µm, D₅₀ de 10 µm et D₉₀ de 34 µm.

Ce laitier alumineux granulé broyé a été utilisé dans des formulations pour sols comprenant un liant ternaire de type ciment Portland/ ciment alumineux/ sulfate de calcium. Le ciment alumineux est remplacé par le sous-produit à base de laitier alumineux granulé broyé.

Une formulation de mortier pour enduit de sol est donnée dans le tableau 1 suivant :

**Tableau 1**

| Constituant | Teneur % |
|---|---|
| Ciment Portland | 9,4 |
| Laitier alumineux granulé broyé | 9,4 |
| Sulfate de calcium | 6,3 |
| Sable | 45 |
| Filler calcaire | 28 |
| Retardateur de prise | 0,05 |
| Polymère Poudre redispersable | 1,3 |
| Accélérateurs dans la famille des sels de lithium, carbonate de sodium | 0,35 |
| Agents rhéologiques type ether de cellusose | 0,08 |
| Superplastifiant | 0,12 |

Ce mélange pulvérulent est gâché avec de l'eau avec un taux de gâchage de 24%, à une température de 23°C. Des mesures permettant de caractériser la résistance en flexion, en compression selon EN 13892-2, ainsi que le retrait et l'étalement selon DOCUMENT TECHNIQUE du référentiel de certification de la marque CERTIFIE CSTB CERTIFIED relatif aux ENDUITS DE SOL sont effectuées pour évaluer les performances du produit durci. Les résistances mécaniques et variations dimensionnelles sont mesurées sur éprouvettes 4x4x16 cm, conservées à 23°C, à 50% d'humidité relative, après 28 jours. Les résultats obtenus sont regroupés dans le tableau 2 ci-dessous :

**Tableau 2**

| | Critères | Echéances | Valeurs |
|---|---|---|---|
| Résistance en compression (MPa) | >16 (EN 13813) | 28 j | 22 |
| Résistance en flexion (MPa) | >4 (EN 13813) | 28 j | 7,4 |
| Retrait 23°C, 50% HR (mm/m) | < 1 | 28 j | -0,8 |
| Etalement (mm) | >150 (autolissant) | 2 min | 150 |
| | >135 | 20 min | 140 |

Les performances obtenues sont conformes aux spécifications demandées pour un enduit de sol classé P3 autolissant. Les résistances en compression sont supérieures à 18 MPa à 28 jours, les résistances en flexion supérieures à 4 MPa. Le retrait est également inférieur à 1 mm/m à 28 jours. Les propriétés d'application de l'enduit (en particulier le temps de prise) ainsi que ses propriétés mécaniques finales sont similaires à celles obtenues par des mortiers à base d'un liant ternaire comprenant du ciment alumineux à la place du laitier alumineux granulé broyé.

Cette composition de mortier est classée CT-C20-F7 selon la norme EN 13813.

## Revendications

1. Liant hydraulique pour composition de mortier comprenant au moins un laitier alumineux granulé broyé comprenant entre 5 et 25% en poids de silice, entre 30 et 60% en poids d'alumine et entre 20 et 40% en poids de chaux, ledit laitier alumineux étant un laitier dont l'alumine est le constituant le plus abondant, et ledit laitier alumineux granulé broyé étant majoritairement amorphe.

2. Liant selon la revendication 1, tel que le laitier alumineux granulé broyé comprend entre 32% en poids et 45% en poids d'alumine.

3. Liant selon l'une des revendications précédentes, tel que la teneur en silice du laitier alumineux granulé broyé est comprise entre 10 et 20% en poids.

4. Liant selon l'une des revendications précédentes, tel que la teneur en chaux du laitier alumineux granulé broyé est comprise entre 25 et 35% en poids.

5. Liant selon l'une des revendications précédentes, tel que le taux de matière amorphe dans le laitier alumineux granulé broyé, tel que déterminé par diffraction des rayons X selon la méthode de Rietveld, est d'au moins 66%, notamment 90%, en masse.

6. Liant selon l'une des revendications précédentes tel que le laitier alumineux granulé broyé est issu du recyclage par fusion totale de catalyseurs utilisés pour la désulfuration des produits pétroliers, notamment de catalyseurs à base de molybdène et/ou de cobalt.

7. Liant selon la revendication précédente, tel que le laitier alumineux comprend du molybdène ou du cobalt, en une teneur pondérale d'au plus 0,5% exprimée en poids d'oxyde.

8. Liant selon l'une des revendications précédentes comprenant ledit laitier alumineux granulé broyé et au moins un des constituants suivants :
- un ou plusieurs ciments choisis parmi les ciments Portland, les ciments bélitiques, les ciments alumineux ou sulfoalumineux, les ciments de mélanges pouzzolaniques comprenant éventuellement des cendres volantes, des fumées de silice, du calcaire, du schiste calciné et/ou des pouzzolanes naturelles ou calcinées, et/ou
- une source de sulfate de calcium choisie parmi le plâtre, l'hémihydrate, le gypse et /ou l'anhydrite, seuls ou en mélange.

9. Liant selon l'une des revendications précédentes, qui est constitué dudit laitier alumineux granulé broyé et de ciment Portland, la teneur en laitier alumineux granulé broyé étant inférieure à 40% en poids, de préférence inférieure à 20% en poids.

10. Liant selon l'une des revendications 1 à 8, comprenant entre 10 et 50% en poids de ciment Portland, entre 30 et 70% en poids dudit laitier alumineux granulé broyé, et entre 10 et 50% en poids de sulfate de calcium.

11. Composition sèche de mortier comprenant au moins un liant selon l'une des revendications précédentes et des granulats et/ou des fillers.

12. Composition selon la revendication 11, qui est exempte de ciment alumineux ou sulfoalumineux.

13. Composition selon l'une des revendications 11 ou 12, comprenant un ou plusieurs additifs, choisi parmi des agents rhéologiques, des agents rétenteurs d'eau, des agents entraîneurs d'air, des agents épaississants, des agents de protection biocides, des agents dispersants, des pigments, des accélérateurs et/ou des retardateurs, des résines polymériques.

14. Produits pour sol tels que des enduits ou chapes, ou mortiers techniques, susceptibles d'être obtenus par gâchage avec de l'eau de la composition sèche de mortier selon l'une des revendications 11 à 13.

## Patentansprüche

1. Hydraulisches Bindemittel für eine Mörtelzusammensetzung, umfassend mindestens eine gemahlene granulierte Aluminiumoxidschlacke, umfassend zwischen 5 und 25 Gew.-% Siliciumdioxid, zwischen 30 und 60 Gew.-% Aluminiumoxid und zwischen 20 und 40 Gew.-% Kalk, wobei die Aluminiumoxidschlacke eine Schlacke ist, deren am häufigsten vorkommende Bestandteil Aluminiumoxid ist, und wobei die gemahlene granulierte Aluminiumoxidschlacke überwiegend amorph ist.

2. Bindemittel nach Anspruch 1, wobei die gemahlene granulierte Aluminiumoxidschlacke zwischen 32 Gew.-% und 45 Gew.-% Aluminiumoxid umfasst.

3. Bindemittel nach einem der vorstehenden Ansprüche, wobei der Siliciumdioxidgehalt der gemahlenen granulierten Aluminiumoxidschlacke zwischen 10 und 20 Gew.-% liegt.

4. Bindemittel nach einem der vorstehenden Ansprüche, wobei der Kalkgehalt der gemahlenen granulierten Aluminiumoxidschlacke zwischen 25 und 35 Gew.-% liegt.

5. Bindemittel nach einem der vorstehenden Ansprüche, wobei der Anteil an amorphem Material in der gemahlenen granulierten Aluminiumoxidschlacke, wie durch Röntgenbeugung nach der Rietveld-Methode bestimmt, mindestens 66 Massen-%, insbesondere 90 Massen-%, beträgt.

6. Bindemittel nach einem der vorstehenden Ansprüche, wobei die gemahlene granulierte Aluminiumoxidschlacke aus der Wiederverwertung durch vollständige Fusion von Katalysatoren stammt, die für die Entschwefelung von Erdölprodukten verwendet werden, insbesondere Katalysatoren auf Molybdän- und/oder Kobaltbasis.

7. Bindemittel nach dem vorstehenden Anspruch, wobei die Aluminiumoxidschlacke Molybdän oder Kobalt in einem Gewichtsgehalt von höchstens 0,5 %, ausgedrückt als Oxidgewicht, umfasst.

8. Bindemittel nach einem der vorstehenden Ansprüche, umfassend die gemahlene granulierte Aluminiumoxidschlacke und mindestens einen der folgenden Bestandteile:
- einen oder mehrere Zemente, ausgewählt aus Portlandzementen, Belitzementen, Aluminiumoxid- oder Sulfaluminiumoxidzementen, Zementen aus Puzzolanmischungen, umfassend optional Flugasche, Siliciumdioxidrauch, Kalkstein, kalzinierten Schiefer und/oder natürliche oder kalzinierte Puzzolane und/oder
- eine Kalziumsulfatquelle, die ausgewählt ist aus Gipskalk, Halbhydrat, Gips und/oder Anhydrit, einzeln oder vermischt.

9. Bindemittel nach einem der vorstehenden Ansprüche, das aus der gemahlener granulierter Aluminiumoxidschlacke und Portlandzement besteht, wobei der Gehalt an gemahlener granulierter Aluminiumoxidschlacke weniger als 40 Gew.-%, vorzugsweise weniger als 20 Gew.-%, beträgt.

10. Bindemittel nach einem der Ansprüche 1 bis 8, umfassend zwischen 10 und 50 Gew.-% Portlandzement, zwischen 30 und 70 Gew.-% der gemahlenen granulierten Aluminiumoxidschlacke und zwischen 10 und 50 Gew.-% Kalziumsulfat.

11. Trockenmörtelzusammensetzung, umfassend mindestens ein Bindemittel nach einem der vorstehenden Ansprüche und Granulate und/oder Füllstoffe.

12. Zusammensetzung nach Anspruch 11, die frei von Aluminatzement oder Sulfoaluminatzement ist.

13. Zusammensetzung nach einem der Ansprüche 11 bis 12, umfassend einen oder mehrere Zusatzstoffe, die ausgewählt sind aus rheologischen Mitteln, Wasserrückhaltemitteln, Lufteinschlussmitteln, Verdickungsmitteln, bioziden Schutzmitteln, Dispergiermitteln, Pigmenten, Beschleunigern und/oder Verzögerern, Polymerharzen.

14. Bodenprodukte wie Beschichtungen oder Estriche oder technische Mörtel, die durch Anmischen der trockenen Mörtelzusammensetzung nach einem der Ansprüche 11 bis 13 mit Wasser erhältlich sind.

## Claims

1. A hydraulic binder for a mortar composition comprising at least one ground granulated high-alumina slag comprising between 5% and 25% by weight of silica, between 30% and 60% by weight of alumina and between 20% and 40% by weight of lime, said high-alumina slag being a slag wherein alumina is the most abundant constituent, and said ground granulated high-alumina slag being predominantly amorphous.

2. The binder as claimed in claim 1, such that the ground granulated high-alumina slag comprises between 32% and 45% by weight of alumina.

3. The binder as claimed in either of the preceding claims, such that the silica content of the ground granulated high-alumina slag is between 10% and 20% by weight.

4. The binder as claimed in one of the preceding claims, such that content of lime of the ground granulated high-alumina slag is between 25% and 35% by weight.

5. The binder as claimed in one of the preceding claims, such that the content of amorphous material in the ground granulated high-alumina slag, as determined by x-ray diffraction according to the Rietveld method, is at least 66%, in particular 90%, by weight.

6. The binder as claimed in one of the preceding claims, such that the ground granulated high-alumina slag is derived from the recycling by complete melting of catalysts used for the desulfurization of petroleum products, in particular of catalysts based on molybdenum and/or cobalt.

7. The binder as claimed in the preceding claim, such that the ground granulated high-alumina slag comprises molybdenum or cobalt, in a weight content of at most 0.5% expressed by weight of oxide.

8. The binder as claimed in one of the preceding claims comprising said ground granulated high-alumina slag and at least one of the following constituents:
- one or more cements chosen from Portland cements, belite cements, high-alumina or sulfoaluminate cements, cements formed of pozzolanic mixtures optionally comprising fly ash, silica fumes, limestone, calcined schist and/or natural or calcined pozzolans, and/or
- a source of calcium sulfate chosen from plaster, hemihydrate, gypsum and/or anhydrite, alone or as a mixture.

9. The binder as claimed in one of the preceding claims, which is constituted of said ground granulated high-alumina slag and of Portland cement, the content of ground granulated high-alumina slag being less than 40% by weight, preferably less than 20% by weight.

10. The binder as claimed in one of claims 1 to 8, comprising between 10% and 50% by weight of Portland cement, between 30% and 70% by weight of said ground granulated high-alumina slag, and between 10% and 50% by weight of calcium sulfate.

11. A dry mortar composition comprising at least one binder as claimed in one of the preceding claims and aggregates and/or fillers.

12. The composition as claimed in claim 11, which is free of high-alumina or sulfoaluminate cement.

13. The composition as claimed in either of claims 11 or 12, comprising one or more additives, chosen from rheological agents, water-retaining agents, air-entraining agents, thickeners, biocidal protecting agents, dispersants, pigments, accelerators and/or retarders, or polymeric resins.

14. Floor products such as coatings or screeds, or technical mortars, capable of being obtained by mixing with water the dry mortar composition as claimed in one of claims 11 to 13.
